# EUROPÄISCHE PATENTSCHRIFT

(11) **EP 2 329 903 B1**
(45) Veröffentlichungstag und Bekanntmachung des Hinweises auf die Patenterteilung: **06.01.2016**
(21) Anmeldenummer: 10014808.9
(22) Anmeldetag: 20.11.2010
(51) Int. Cl.: B23D 21/14

(54) **Rohrschneideverfahren und Vorrichtung**
Tube cutting method and device
Procédé de coupe de tuyaux et dispositif

(30) Priorität: 04.12.2009 DE 102009057115
(43) Veröffentlichungstag der Anmeldung: 08.06.2011
(73) Patentinhaber: AuTech GmbH, 74429 Sulzbach-Laufen (DE)
(72) Erfinder: Hähnle, Thomas, 74429 Sulzbach-Laufen (DE)
(74) Vertreter: Kohler Schmid Möbus Patentanwälte

(56) Entgegenhaltungen:
- EP-A1- 0 173 025
- EP-A2- 0 238 303
- EP-A2- 0 288 288
- WO-A1-2008/118716
- DE-A1- 10 238 872
- DE-B3- 10 238 871
- NL-A- 6 614 569
- US-A- 669 983
- US-A- 2 139 682
- US-A- 2 942 092
- US-A- 3 495 312
- US-A- 3 648 500
- US-A- 4 369 573

## Beschreibung

Die Erfindung betrifft ein Rohrschneideverfahren und eine Rohrschneidevorrichtung zur Durchführung des Verfahrens. Das Rohrschneideverfahren weist die Merkmale des Oberbegriffs des Anspruchs 1 auf, die Rohrschneidevorrichtung weist die Merkmale des Oberbegriffs des Anspruchs 3 auf.

Aus der den Oberbegriff vom Anspruch 1, bzw. den Oberbegriff vom Anspruch 3 beschriebenen WO 2008/118716 A1 ist eine Rohrschneidevorrichtung bekannt, die eine in eine Rotationsbewegung versetzbare Antriebswelle für ein Schneidmesser aufweist, das in das Rohr eingeführt werden kann und gegen die Innenwand des Rohres anstellbar ist. Die Antriebsvorrichtung, die die Antriebswelle in Rotation versetzt, sorgt auch für eine Art Taumelbewegung der Antriebswelle. Durch die gleichzeitige Taumelbewegung der Antriebswelle und die Rotation um ihre Längsachse wird das einseitige Lager für die Antriebswelle stark belastet. Außerdem ist es schwierig, die beiden Bewegungen der Antriebswelle derart aufeinander abzustimmen, dass ein Schnitt hoher Qualität entsteht. Weiter ist die bekannte Antriebswelle konisch ausgebildet und kann daher nicht oder nicht sehr weit in Rohre mit sehr kleinem Durchmesser eingeführt werden.

Rohre mit einem Durchmesser < 8 mm können daher nicht mit der bekannten gattungsgemäßen Rohrschneidevorrichtung von innen abgeschnitten werden.

Sehr dünne Rohre, wie sie z. B. als Kupferrohre bei Schweißungen von Spulen als Schweißhülsen verwendet werden, können also nicht nach dem dieser Rohrschneidevorrichtung zugrunde liegenden Prinzip getrennt werden. Diese so genannten Mikrorohre haben einen Durchmesser zwischen einem und drei Millimetern. Sie werden üblicherweise über einen sehr teuren Prozess gesägt, um sie abzulängen.

Der Erfindung liegt die Aufgabe zugrunde, ein Rohrschneideverfahren und eine Rohrschneidevorrichtung zur Durchführung des Rohrschneideverfahrens bereitzustellen, welche Nachteile des Standes der Technik vermeiden, wobei insbesondere auch Rohre mit geringem Durchmesser von innen zuschneidbar sein sollen.

Diese Aufgabe wird durch die Gegenstände der Patentansprüche gelöst. Die abhängigen Ansprüche stellen bevorzugte Ausführungsformen der Erfindung dar.

Bei einem erfindungsgemäßen Rohrschneideverfahren werden die Verfahrensschritte gemäß Anspruch 1 durchgeführt.

Erfindungsgemäß wird die Rotationsbewegung als Taumelbewegung des Schneidmesserbefestigungsendes der Antriebswelle und/oder des daran montierten Schneidmessers vorgenommen. Die Antriebswelle rotiert also nicht um ihre eigene Achse sondern um eine zu ihrer Längsachse einen spitzen Winkel ausbildende Rotationsachse. Diese Rotationsachse kann mit der Antriebsachse eines als Antrieb verwendeten Elektromotors zusammenfallen. Eine derart auf einer Kegeloberfläche mit einem spitzen Öffnungswinkel a rotierende Antriebswelle wird als Taumelwelle bezeichnet. Das zu schneidende Rohr ist dabei bevorzugt mit seiner Längsachse parallel zu der Rotationsachse orientiert, sodass die Längsachse der Taumelwelle ebenfalls einen spitzen Winkel α mit der Längsachse des Rohres einschließt.

Dadurch, dass beim Ausführen der Taumelbewegung die Taumelwelle nicht parallel zur Längsachse des Rohres stehen muss, führt die Kraft, die zum Schneiden des Rohres auf die Schneide des Schneidmessers ausgeübt werden muss, zu einem verminderten Biegemoment der Antriebswelle und damit zu geringeren auf das Schneidmesser und seine Befestigung an der Antriebswelle wirkenden Kräften. Die Taumelbewegung selbst kann das bei bekannten gattungsgemäßen Rohrschneidevorrichtungen übliche Abrollen eines drehbar aufgehängten Schneidrades ersetzen. Dadurch kann das Ausbilden einer eine Schneidradaufhängung umfassenden Schneideinheit vermieden werden, wodurch das in das Rohr einzuführende Schneidmesser sehr Platz sparend ausgebildet sein kann. Derart können auch Rohre mit einem Durchmesser unter 8 mm praktisch ohne anfallende Späne von innen kostengünstig abgelängt, d. h. abgeschnitten werden.

Die Taumelbewegung wird dadurch erzeugt, dass ein Rotieren des Antriebs über eine Exzenterkupplung exzentrisch vom Antrieb auf die Antriebswelle übertragen wird und die Antriebswelle in einem Haltebereich zwischen der Exzenterkupplung und dem Schneidmesser in einem Stützlager rotierend gehalten ist. Durch diese Lagerung der als Taumelwelle ausgebildeten Antriebswelle wird die Taumelbewegung sicher zweifach gelagert geführt. Die Taumelwelle bildet so einen doppelt eingespannten Biegebalken aus, was weiter zur Reduzierung der auf die Taumelwelle einwirkenden Biegemomente führt. Es ist somit möglich, das Schneidmesser wesentlich steifer auszugestalten und dadurch eine wesentliche Erhöhung der Schnittgeschwindigkeit und damit der geschnittenen Rohre, also der Schnittzahl, zu erreichen.

Dabei dient die Exzenterkupplung als Lagerung und Antriebselement, welche eine rotierende Bewegung vom Antrieb auf die Taumelwelle überträgt und das Stützlager als zweites Lager der Taumelwelle zu deren Fixierung. Im Bereich des Stützlagers überschneiden sich die Längsachse der Taumelwelle und die Rotationsachse, um die die Taumelwelle herum rotiert.

Bevorzugt wird das zu schneidende Rohr in einer, bevorzugt eine Innenprofilierung aufweisenden, Schneidmatrize gehalten, wobei am Schneidmesserbefestigungsende der Antriebswelle und/oder an einem freien Ende des Schneidmessers eine Erweiterung zum Umbördeln eines Randbereiches des durch das Abschneiden des Rohres entstandenen freien Rohrendes vorgesehen ist.

Durch das Eindringen des Schneidwerkzeugs, also der Schneide des Schneidmessers, in die Rohrwand im Innenraum des Rohres kommt es dabei zur Bildung einer so genannten Tulpe, d. h. zu einer Aufweitung des Randbereichs des Rohrendes im Schnittbereich. Damit können prozesssicher und günstig Schweißhülsen hergestellt werden, die eine Aufweitung im Endbereich besitzen und gleichzeitig ohne Späne hergestellt werden. Dies ist vor allem in der Feinmechanik von großer Bedeutung, da dort dem Vermeiden von Spänen eine zentrale Rolle in der Weiterverarbeitung von Bauelementen zukommt. Durch die Nutzung der Hebelübersetzung der Taumelwelle ist es möglich, sehr kleine Einheiten zu bauen, die dann in einen Automatisierungsprozess leicht eingebaut werden können.

Eine erfindungsgemäße Rohrschneidevorrichtung ist zur Durchführung des erfindungsgemäßen Rohrschneideverfahrens eingerichtet.

Die erfindungsgemäße Rohrschneidevorrichtung weist die Merkmale des Anspruchs 3 auf.

Erfindungsgemäß ist die Antriebswelle als Taumelwelle ausgebildet. Die Taumelwelle ermöglicht ein spanfreies Schneiden von Rohren von der Rohrinnenseite aus. Die als Taumelwelle ausgeführte Antriebswelle ermöglicht das Einbringen von hohen Kräften zum Schneiden des Rohres unter verminderten auf die Antriebswelle einwirkenden Biegemomenten.

Die Taumelwelle ist über eine Exzenterkupplung mit dem Antrieb verbunden und in einem Haltebereich zwischen der Exzenterkupplung und dem Schneidmesser in einem Stützlager rotierbar gehalten. Die Taumelwelle bildet so einen doppelt gelagerten Biegebalken aus, was auftretende Ungenauigkeit beim Schneiden des Rohres vermindert.

Es ist außerdem eine Verschiebevorrichtung vorgesehen, eingerichtet, den Abstand zwischen dem Stützlager und der Exzenterkupplung zu variieren. Alternativ oder zusätzlich kann die Exzenterkupplung Exzentrizitätseinstellmittel zum Verstellen der Exzentrizität der Taumelbewegung der Taumelwelle aufweisen.

Die Verschiebevorrichtung ist so gestaltet, dass es möglich ist, über die Verschiebung des Stützlagers auftretende Kräfte auf die Taumelwelle und/oder das Schneidmesser nahezu beliebig zu beeinflussen. Durch die Exzentrizitätseinstellmittel kann der Angriffspunkt des z. B. als Aufnahmefinger ausgeführten, antriebsnahen Endes der Taumelwelle auf der Exzenterscheibe variiert werden. Durch diese Variationsmöglichkeit und die Möglichkeit der Verschiebung des zweiten Lagerbockes, also des Stützlagers, ist es möglich, die erfindungsgemäße Rohrschneidevorrichtung in der Art zu gestalten, dass Kräfte beliebig aufgebracht und variiert werden können. Der spitze Winkel α (Auslenkungswinkel) zwischen der Längsachse des Rohres und der Längsachse der Taumelwelle kann so verändert werden. Durch die Kombination der Verschiebevorrichtung und der Exzentrizitätseinstellmittel ist es möglich, ein schnelles Anfahren der Rohrschneidevorrichtung und eine starke Kraftausübung bei niedrigen Rotationsgeschwindigkeiten zu erreichen.

Vorteilhaft ist ein zusätzlicher Fräsantrieb vorgesehen, wobei die Taumelwelle von dem Fräsantrieb um ihre Längsachse in Rotation versetzbar ist.

Es kann so eine überlagerte Bewegung der Taumelbewegung mit einer Drehbewegung des Schneidmessers so gestaltet werden, dass das Schneidmesser auch gleichzeitig als Fräswerkzeug während des Schneidens des Rohres verwendet werden kann. Derart ist es möglich, Konturen in das zu schneidende Rohr einzufräsen, z. B. können Materialschwächungen in eine abzuschneidende Schweißhülse gefräst und gleichzeitig prozesssicher das Abschneiden der Schweißhülse am Ende des abzuschneidenden Rohres durchgeführt werden.

Sehr vorteilhaft ist das Schneidmesser als eine bolzenförmige Verlängerung (Aufnahmedorn) der Taumelwelle am Schneidmesserbefestigungsende befestigt und die Schneide des Schneidmessers ist von einer umlaufenden Kante des taumelwellenfernen Endes (Endfläche) des Schneidmessers, d. h. der bolzenförmigen Verlängerung ausgebildet. Das insbesondere als Aufnahmedorn ausgebildete Schneidmesser kann auch ein Schneidrad aufweisen, wobei das Schneidrad am taumelwellenfernen Ende des Schneidmessers um die Längsachse der Taumelwelle rotierbar befestigt ist.

Derart ist es möglich, eine Reduzierung des Aufnahmedorns minimal zu gestalten, d. h. die Schneide des Schneidmessers kann dabei nur minimal radial über die bolzenförmige Verlängerung hinausstehen. Es treten so nur minimale Biegemomente im Bereich der Schneide des Schneidmessers auf.

Durch den relativ kleinen Auslenkungswinkel des Aufnahmedorns zum zu bearbeitenden Rohr und den relativ klein wählbaren Durchmesser des Aufnahmedorns, der mit dem Durchmesser des Schneidrades identisch gewählt werden kann, wird die Gefahr einer Kollision des Aufnahmedorns und des Schneidrades beim Eindringen des Schneidrades in das abzuschneidende Rohr minimiert. Die Ausführung des Schneidmessers als bolzenförmige Verlängerung ermöglicht, auch bei kleinen Durchmessern von Rohren, ein Maximum an Steifheit des Aufnahmedorns während des Schneidens des Rohres. Es können Rohre mit Rohrdurchmessern, die deutlich kleiner als 8 mm sind, nahezu spanfrei von innen abgeschnitten werden.

Wenn die Schneide des Schneidmessers von einer umlaufenden Kante der bolzenförmigen Verlängerung ausgebildet ist, stellt der Aufnahmedorn gleichzeitig auch ein Schneidwerkzeug dar. Die Endfläche des Aufnahmedorns ist dabei so gestaltet, dass sie als Schneidfläche genutzt werden kann. Die Möglichkeit des Nachschleifens des Aufnahmedorns an der Schneidfläche bewirkt, dass der Aufnahmedorn durch mehrfaches Nachschleifen, nahezu beliebig oft eingesetzt werden kann. Dies führt zu einer deutlichen Minimierung der Werkzeugverschleißkosten. Der Aufnahmedorn kann materialschlüssig mit der Taumelwelle ausgeführt sein. Mit einer erfindungsgemäßen Rohrschneidevorrichtung mit doppelt gelagerter Taumelwelle, d. h. im Falle der einstückigen Ausführung der Taumelwelle mit dem Aufnahmedorn mit dem doppelt gelagerten Aufnahmedorn, und einem Aufnahmedorn, der gleichzeitig als Schneidwerkzeug ausgeführt ist, ist es möglich, Hülsen, d. h. Rohrabschnitte, mit Durchmessern kleiner 1 mm von einem Kupferrohr exakt und schnell zu abzutrennen.

Insbesondere zum Herstellen von Schweißhülsen ist bevorzugt am taumelwellenfernen Ende des Schneidmessers eine Erweiterung zum Umbördeln eines Randbereiches des durch das Abschneiden des Rohres entstehenden freien Rohrendes vorgesehen.

Die Erfindung wird nachfolgend anhand eines Ausführungsbeispiels unter Bezugnahme auf die Zeichnungen näher erläutert.

Die Fig. 1 zeigt eine erfindungsgemäße Rohrschneidevorrichtung.

Die Fig. 2 zeigt eine Ausführungsform eines Schneidmessers einer erfindungsgemäßen Rohrschneidevorrichtung.

Die Fig. 3 zeigt eine weitere Ausführungsform eines Schneidmessers einer erfindungsgemäßen Rohrschneidevorrichtung.

Die Figuren der Zeichnungen zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

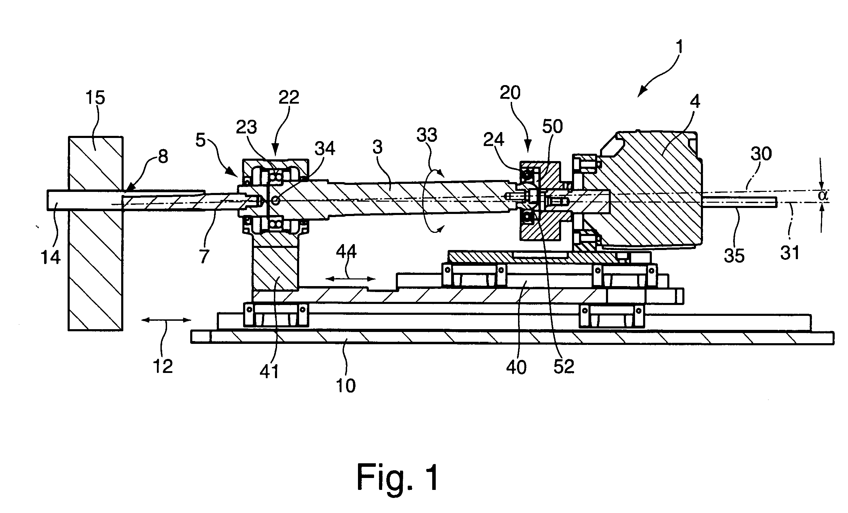

In Fig. 1 ist eine erfindungsgemäße Rohrschneidevorrichtung 1 in einem Schnittbild dargestellt. Die Rohrschneidevorrichtung 1 weist eine als Taumelwelle ausgebildete Antriebswelle 3 auf, die mittels eines motorischen Antriebes 4 in eine Rotationsbewegung versetzbar ist. An einem freien antriebsabgewandten Ende (Schneidmesserbefestigungsende 5) der Antriebswelle 3 ist ein Schneidmesser 7 mit einer Schneide 8 befestigt. Die Rohrschneidevorrichtung 1 ist horizontal verschiebbar auf einer Basisplatte 10 montiert, sodass durch ein durch einen Doppelpfeil symbolisiert dargestelltes Verschieben 12 das Schneidmesser 7 in ein abzuschneidendes Rohr 14 einführbar ist, bzw. in der Darstellung bereits eingeführt ist. Das zu schneidende Rohr 14 ist in einer z. B. von zwei Pressbacken ausgebildeten Schneidmatrize 15 gehalten.

Das Schneidmesser 7 bildet eine bolzenförmige Verlängerung der Taumelwelle 3 am Schneidmesserbefestigungsende 5 der Taumelwelle 3 aus bzw. ist dort befestigt. Die Schneide 8 des Schneidmessers 7 wird von einer umlaufenden Kante des taumelwellenfernen Endes des Schneidmessers 7 ausgebildet, sodass die Schneide 8 des Schneidmessers 7 radial von der Antriebswelle 3 nach außen abstehend angeordnet ist.

Die Taumelwelle 3 ist über eine Exzenterkupplung 20 mit dem Antrieb 4 verbunden und in einem Haltebereich zwischen der Exzenterkupplung 20 und dem Schneidmesser 7 in einem Stützlager 22 rotierbar gehalten. In dem Stützlager 22 ist die Taumelwelle 3 ortsfest in einem Kugel- oder Walzenlager 23 gehalten und innerhalb der Exzenterkupplung 20 ist das antriebsnahe Ende der Taumelwelle 3 in einem weiteren Kugel- oder Walzenlager 24 gelagert. Das antriebsnahe Ende der Taumelwelle 3 ist dazu kugelgelenkkopfförmig ausgebildet. Die vom Antrieb 4 erzeugte Drehbewegung der Exzenterkupplung 20 wird derart nicht in eine Rotation um die Längsachse 30 der Taumelwelle 3, sondern lediglich in eine als Taumelbewegung ausgeführte Rotationsbewegung der Taumelwelle 3 um eine zur Längsachse 30 der Taumelwelle einen spitzen Winkel α ausbildende Rotationsachse 31 übertragen. Die Taumelbewegung ist in der Figur durch einen gebogenen Pfeil 33 symbolisch dargestellt. Diese Rotationsachse 31 ist durch den Mittelpunkt 34 des Stützlagers 22 und die Drehachse 35 des Antriebes 4 festgelegt. Es wird also eine Taumelbewegung des Schneidmesserbefestigungsendes 5 der Antriebswelle 3 und des daran montierten Schneidmessers 7 vorgenommen, wodurch die Schneide 8 umlaufend in die Innenoberfläche des Rohres 14 eingedrückt wird und das Rohr 14 abgeschnitten wird.

Es ist eine Verschiebevorrichtung 40 vorgesehen, eingerichtet, den Abstand zwischen dem Stützlager 22 und der Exzenterkupplung 20 zu variieren. Dazu ist der Antrieb 4 über die Verschiebevorrichtung 40 mit einer Halterung 41 des Stützlagers 22 verbunden. Die dadurch gegebene Verschieblichkeit ist durch einen weiteren Doppelpfeil 44 symbolisiert dargestellt. Der Abstand zwischen dem Antrieb 4 und dem Stützlager 22 ist so einstellbar, wodurch der Winkel α und damit eine Exzentrizität der Taumelbewegung verstellbar ist. Weiter weist die Exzenterkupplung 20 Exzentrizitätseinstellmittel 50 zum Verstellen der Exzentrizität der Taumelbewegung der Taumelwelle 3 auf. Die Exzentrizitätseinstellmittel 50 sind durch die Ausführung des Kugel- oder Walzenlagers 24 der Exzenterkupplung 20 als einstellbares Lager realisiert. Bei dem einstellbaren Lager ist der Innendurchmesser einer Aufnahme variabel einstellbar, wodurch das als Kugelgelenkkopf 52 ausgebildete Ende der Taumelwelle 3 unterschiedlich weit in die Aufnahme eingeschoben werden kann. Im dargestellten Fall ist der Kugelgelenkkopf 52 maximal in die Aufnahme eingeschoben, was einer maximalen Exzentrizität entspricht.

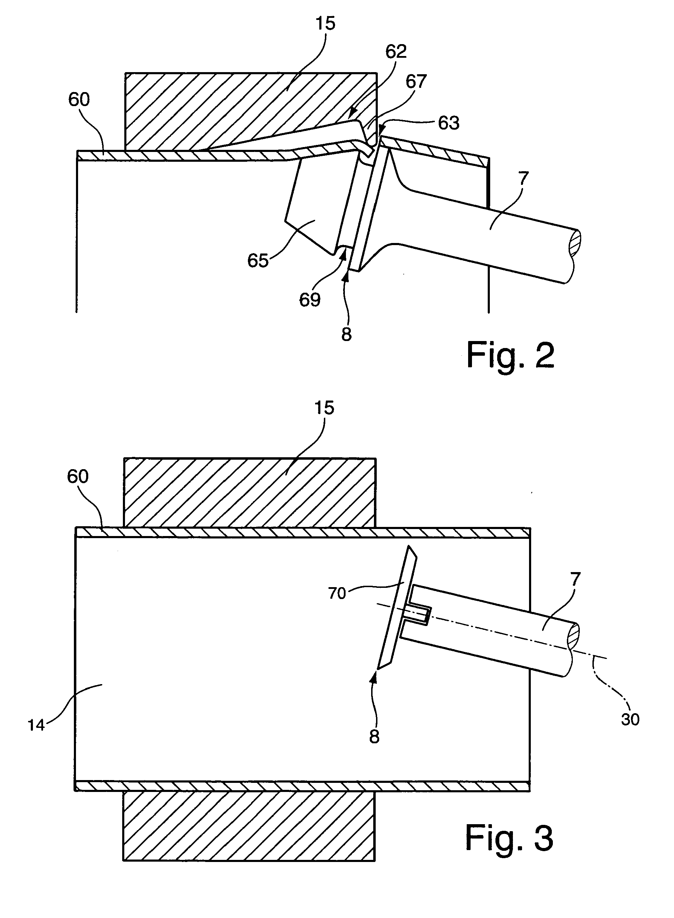

Die Fig. 2 zeigt eine Ausführungsform eines Schneidmessers 7 einer erfindungsgemäßen Rohrschneidevorrichtung. Es ist dargestellt, wie das Schneidmesser 7 in eine Rohrwand 60 eines in einer Schneidmatrize 15 mit einer Innenprofilierung 62 gehaltenen, d. h. eingespannten Rohres 14 eindringt, um das Rohr 14 abzuschneiden und daraufhin bzw. gleichzeitig die entstehende Abschnittkante 63 der Rohrwand 60 nach innen umzubörteln. Wie das Schneidmesser 7 aus Fig. 1 ist auch dieses Schneidmesser 7 als eine bolzenförmige Verlängerung der nicht dargestellten Taumelwelle ausgebildet. Die Schneide 8 des Schneidmessers 7 ist von einer umlaufenden Kante des taumelwellenfernen Endes des Schneidmessers 7 ausgebildet, sodass die Schneide 8 des Schneidmessers 7 radial von der Antriebswelle nach außen stehend angeordnet ist. Zum Umbördeln der Abschnittkante (Rohraußenkante) 63 ist an einem freien Ende des Schneidmessers 7 eine Erweiterung 65 des Schneidmessers 7 vorgesehen. Beim bzw. nach dem Einschneiden der Rohrwand 60 mit der Schneide 8 wird die Rohraußenkante 63 von der Erweiterung 65 in eine von der Innenprofilierung 62 der Schneidmatrize 15 ausgebildete Vertiefung eingedrückt. Dazu bildet eine umlaufende Kante 67 der Schneidmatrize 15 ein Gegenlager aus, wodurch die Rohraußenkante 63 nach innen, d. h. in Richtung Innenrohr elastisch verformt, also umgebördelt wird. Die Erweiterung 65 weist dazu die Form eines Kegelstumpfes auf, der mit seiner Rotationsachse an die Längsachse des Schneidmessers 7 und der Taumelwelle anschließt. Weiter ist zwischen dem Kegelstumpf und der umlaufenden Schneide 8 des Schneidmessers 7 eine radial umlaufende Nut 69 vorgesehen, in die die Rohraußenkante 63 von der umlaufenden Kante 67 der Schneidmatrize 15 eingedrückt wird.

Die Fig. 3 zeigt eine Ausführungsform eines Schneidmessers 7 einer erfindungsgemäßen Rohrschneidevorrichtung mit einem Schneidrad 70 dessen äußerer Rand die Schneide 8 des Schneidmessers 7 ausbildet. Das Schneidmessers 7 ist dargestellt, kurz bevor dessen Schneide 8 in eine Rohrwand 60 eines, in einer Schneidmatrize 15 gehaltenen, d .h. eingespannten Rohres 14 eindringt, um das Rohr 14 abzuschneiden. Das Schneidrad 70 ist am Taumelwellenfernen Ende des Schneidmessers 7 um die Längsachse 30 der Taumelwelle rotierbar befestigt.

Vorgeschlagen werden ein Rohrschneideverfahren und eine Rohrschneidevorrichtung 1 zur Durchführung des Rohrschneideverfahrens. Das Rohrschneideverfahren weist folgende Verfahrensschritte auf:
- Einführen eines Schneidmessers 7 in ein zu schneidendes Rohr 14, wobei das Schneidmesser 7 im Bereich eines freien Schneidmesserbefestigungsendes 5 einer Antriebswelle 3 an der Antriebswelle 3 befestigt ist und wobei eine Schneide 8 des Schneidmessers 7 radial von der Antriebswelle 3 nach außen stehend angeordnet ist, und
- Abschneiden eines Abschnittes des Rohres 14 mittels der Schneide 8 des Schneidmessers 7 durch eine von einem Antrieb 4 erzeugte Rotationsbewegung der Antriebswelle 3.

Dabei wird die Rotationsbewegung als Taumelbewegung 33 des Schneidmesserbefestigungsendes 5 der Antriebswelle 3 und/oder des daran montierten Schneidmessers 7 vorgenommen.

## Patentansprüche

1. Rohrschneideverfahren mit den Verfahrensschritten
- Einführen eines Schneidmessers (7) in ein zu schneidendes Rohr (14), wobei das Schneidmesser (7) im Bereich eines freien Schneidmesserbefestigungsendes (5) einer Antriebswelle (3) an der Antriebswelle (3) befestigt ist und wobei eine Schneide (8) des Schneidmessers (7) radial von der Antriebswelle (3) nach außen stehend angeordnet ist, und
- Abschneiden eines Abschnittes des Rohres (14) mittels der Schneide (8) des Schneidmessers (7) durch eine von einem Antrieb (4) erzeugte Rotationsbewegung der Antriebswelle (3),
wobei die Rotationsbewegung als Taumelbewegung (33) des Schneidmesserbefestigungsendes (5) der Antriebswelle (3) und/oder des daran montierten Schneidmessers (7) vorgenommen wird, **dadurch gekennzeichnet, dass** die Taumelbewegung (33) dadurch erzeugt wird, dass ein Rotieren vom Antrieb (4) über eine Exzenterkupplung (20) exzentrisch vom Antrieb (4) auf die Antriebswelle (3) ausschließlich in eine Taumelbewegung der Antriebswelle (3) und nicht in eine Rotationsbewegung der Antriebswelle (3) um ihre Längsachse (30) übertragen wird und die Antriebswelle (3) in einem Haltebereich zwischen der Exzenterkupplung (20) und dem Schneidmesser (7) in einem Stützlager (22) rotierend gehalten ist.

2. Rohrschneideverfahren nach Anspruch 1, **dadurch gekennzeichnet, dass** das zu schneidende Rohr (14) in einer, bevorzugt eine Innenprofilierung (62) aufweisenden, Schneidmatrize (15) gehalten wird, wobei am Schneidmesserbefestigungsende (5) der Antriebswelle (3) und/oder an einem freien Ende des Schneidmessers (7) eine Erweiterung (65) zum Umbördeln eines Randbereiches (63) des, durch das Abschneiden des Rohres (14) entstandenen, freien Rohrendes vorgesehen ist.

3. Rohrschneidevorrichtung (1) zur Durchführung des Rohrschneideverfahrens nach Anspruche 1 oder 2 mit
- einer mittels eines Antriebes (4) in eine Rotationsbewegung versetzbaren Antriebswelle (3),
- einem in ein zu schneidendes Rohr (14) einführbaren Schneidmesser (7), wobei das Schneidmesser (7) im Bereich eines freien Schneidmesserbefestigungsendes (5) der Antriebswelle (3) an der Antriebswelle (3) befestigt ist und wobei eine Schneide (8) des Schneidmessers (7) radial von der Antriebswelle (3) nach außen stehend angeordnet ist,
wobei die Antriebswelle (3) als Taumelwelle ausgebildet ist und die Taumelwelle (3) über eine Exzenterkupplung (20) mit dem Antrieb (4) verbunden ist und in einem Haltebereich zwischen der Exzenterkupplung (20) und dem Schneidmesser (7) in einem Stützlager (22) rotierbar gehalten ist und vom Antrieb (4) nicht um ihre Längsachse (30) rotierend angetrieben ist, **dadurch gekennzeichnet, dass** eine Verschiebevorrichtung (40) vorgesehen ist, eingerichtet, den Abstand zwischen dem Stützlager (22) und der Exzenterkupplung (20) zu variieren.

4. Rohrschneidevorrichtung nach Anspruch 3, **dadurch gekennzeichnet, dass** die Exzenterkupplung (20) Exzentrizitätseinstellmittel (50) zum Verstellen der Exzentrizität einer Taumelbewegung (33) der Taumelwelle (3) aufweist.

5. Rohrschneidevorrichtung nach Anspruch 3 oder 4, **dadurch gekennzeichnet, dass** ein Fräsantrieb vorgesehen ist, wobei die Taumelwelle (3) von dem Fräsantrieb um ihre Längsachse (30) in Rotation versetzbar ist.

6. Rohrschneidevorrichtung nach einem der Ansprüche 3 bis 5, **dadurch gekennzeichnet, dass** das Schneidmesser (7) als eine bolzenförmige Verlängerung der Taumelwelle (3) am Schneidmesserbefestigungsende (5) befestigt ist und die Schneide (8) des Schneidmessers (7) von einer umlaufenden Kante des taumelwellenfernen Endes des Schneidmessers (7) ausgebildet ist oder dass das Schneidmesser (7) ein Schneidrad (70) aufweist, wobei das Schneidrad (70) am taumelwellenfernen Ende des Schneidmessers (7) um die Längsachse (30) der Taumelwelle (3) rotierbar befestigt ist.

7. Rohrschneidevorrichtung nach Anspruch 6, **dadurch gekennzeichnet, dass** am taumelwellenfernen Ende des Schneidmessers (7) eine Erweiterung (65) zum Umbördeln eines Randbereiches (63) des durch das Abschneiden des Rohres (14) entstehenden freien Rohrendes vorgesehen ist.

## Claims

1. Tube-cutting method comprising the steps of
- inserting a cutting blade (7) into a tube (14) to be cut, wherein the cutting blade (7) is fastened to a drive shaft (3) in the region of a free cutting blade fastening end (5) of the drive shaft (3) and wherein a cutting edge (8) of the cutting blade (7) is arranged to project radially outwards from the drive shaft (3), and
- cutting off a section of the tube (14) by means of the cutting edge (8) of the cutting blade (7) by a rotational movement of the drive shaft (3) generated by a drive (4),
wherein the rotational movement is effected as a wobbling movement (33) of the cutting blade fastening end (5) of the drive shaft (3) and/or of the cutting blade (7) mounted thereon, **characterised in that** the wobbling movement (33) is generated in that rotation of the drive (4) is transmitted to the drive shaft (3) via an eccentric coupling (20) eccentric to the drive (4) exclusively in the form of a wobbling movement of the drive shaft (3) and not in the form of a rotational movement of the drive shaft (3) about its longitudinal axis (30) and the drive shaft (3) is held rotatably in a support bearing (22) in a holding region between the eccentric coupling (20) and the cutting blade (7).

2. Tube-cutting method according to claim 1, **characterised in that** the tube (14) to be cut is held in a cutting die (15) preferably having internal profiling (62), wherein an expanded portion (65) for flanging an edge region (63) of the free tube end produced by cutting the tube (14) is provided at the cutting blade fastening end (5) of the drive shaft (3) and/or at a free end of the cutting blade (7).

3. Tube-cutting device (1) for carrying out the tube-cutting method according to claim 1 or claim 2, comprising
- a drive shaft (3) that can be set in rotation by means of a drive (4), and
- a cutting blade (7) that can be inserted into a tube (14) to be cut, wherein the cutting blade (7) is fastened to the drive shaft (3) in the region of a free cutting blade fastening end (5) of the drive shaft (3) and wherein a cutting edge (8) of the cutting blade (7) is arranged to project radially outwards from the drive shaft (3),
wherein the drive shaft (3) is designed as a wobble shaft and the wobble shaft (3) is connected to the drive (4) via an eccentric coupling (20) and is held rotatably in a support bearing (22) in a holding region between the eccentric coupling (20) and the cutting blade (7) and is not driven in rotation about its longitudinal axis (30) by the drive (4), **characterised by** a displacement device (40) designed to vary the distance between the support bearing (22) and the eccentric coupling (20).

4. Tube-cutting device according to claim 3, **characterised in that** the eccentric coupling (20) has eccentricity adjusting means (50) for adjusting the eccentricity of a wobbling movement (33) of the wobble shaft (3).

5. Tube-cutting device according to claim 3 or claim 4, **characterised by** a milling drive, wherein the wobble shaft (3) can be set in rotation about its longitudinal axis (30) by the milling drive.

6. Tube-cutting device according to one of claims 3 to 5, **characterised in that** the cutting blade (7) is fastened to the cutting blade fastening end (5) as a bolt-shaped extension of the wobble shaft (3) and the cutting edge (8) of the cutting blade (7) is formed by a circumferential edge of the end of the cutting blade (7) remote from the wobble shaft or that the cutting blade (7) has a cutting wheel (70), wherein the cutting wheel (70) is fastened to the end of the cutting blade (7) remote from the wobble shaft in such a manner that it can rotate about the longitudinal axis (30) of the wobble shaft (3).

7. Tube-cutting device according to claim 6, **characterised in that** an expanded portion (65) for flanging an edge region (63) of the free tube end produced by cutting the tube (14) is provided at the end of the cutting blade (7) remote from the wobble shaft.

## Revendications

1. Procédé de coupe de tube, comprenant les étapes suivantes
- on enfonce un couteau de coupe (7) dans un tube à couper (14), le couteau de coupe (7) étant fixé sur un arbre d'entraînement (3) dans la région d'une extrémité libre de fixation de couteau (5) de l'arbre d'entraînement (3), et dans lequel un tranchant (8) du couteau de coupe (7) est agencé de manière à se dresser radialement vers l'extérieur depuis l'arbre d'entraînement (3), et
- on coupe un tronçon du tube (14) au moyen du tranchant (8) du couteau de coupe (7) par un mouvement de rotation de l'arbre d'entraînement (3) engendré par un entraînement (4),
dans lequel le mouvement de rotation est exécuté sous forme d'un mouvement excentrique (3) de l'extrémité de fixation de couteau (5) de l'arbre d'entraînement (3) et/ou du couteau de coupe (7) monté sur celui-ci,
**caractérisé en ce que** le mouvement excentrique (33) est engendré du fait qu'une rotation de l'entraînement (4) est transmise via un accouplement excentrique (20) de manière excentrée depuis l'entraînement (4) vers l'arbre d'entraînement (3) exclusivement en un mouvement excentrique de l'arbre d'entraînement (3) et non pas un mouvement de rotation de l'arbre d'entraînement (3) autour de son axe longitudinal (30), et l'arbre d'entraînement (3) est maintenu en rotation dans un palier de soutien (22) dans une zone de maintien entre l'accouplement excentrique (20) et le couteau de coupe (7).

2. Procédé de coupe de tube selon la revendication 1, **caractérisé en ce que** le tube à couper (14) est maintenu dans une matrice de coupe (15), comportant de préférence un profilage interne (62), dans lequel un élargissement (65) destiné à rabattre une zone de bordure (63) de l'extrémité libre du tube qui apparaît lors de la coupe du tube (14) est prévu à l'extrémité de fixation de couteau (5) de l'arbre d'entraînement (3) et/ou à une extrémité libre du couteau de coupe (7).

3. Dispositif de coupe de tube (1) pour la mise en oeuvre du procédé de coupe de tube selon les revendications 1 ou 2, comprenant
- un arbre d'entraînement (3) susceptible d'être mis dans un mouvement de rotation au moyen d'un entraînement (4),
- un couteau de coupe (7) susceptible d'être introduit dans un tube à couper (14), dans lequel le couteau de coupe (7) est fixé sur l'arbre d'entraînement (3) dans une région d'une extrémité libre de fixation de couteau (5) de l'arbre d'entraînement (3), et dans lequel un tranchant (8) du couteau de coupe (7) est agencé de manière à se dresser radialement vers l'extérieur depuis l'arbre d'entraînement (3),
dans lequel l'arbre d'entraînement (3) est réalisé sous forme d'un arbre orbital, et l'arbre orbital (3) est relié à l'entraînement (4) via un accouplement excentrique (20), et est maintenu en rotation dans un palier de soutien (22) dans une zone de maintien entre l'accouplement excentrique (20) et le couteau de coupe (7), et l'entraînement (4) n'est pas entraîné en rotation autour de son axe longitudinal (30),
**caractérisé en ce qu'**il est prévu un dispositif de déplacement (40) afin de faire varier la distance entre le palier de soutien (22) et l'accouplement excentrique (20).

4. Dispositif de coupe de tube selon la revendication 3, **caractérisé en ce que** l'accouplement excentrique (20) comprend des moyens de réglage d'excentricité (50) pour régler l'excentricité d'un mouvement excentrique (33) de l'arbre orbital (3).

5. Dispositif de coupe de tube selon la revendication 3 ou 4, **caractérisé en ce qu'**il est prévu un entraînement à fraisage, de sorte que l'arbre orbital (3) est susceptible d'être mis en rotation autour de son axe longitudinal (30) par l'entraînement à fraisage.

6. Dispositif de coupe de tube selon l'une des revendications 3 à 5, **caractérisé en ce que** le couteau de coupe (7) est fixé sur l'extrémité de fixation de couteau (5) sur un prolongement en forme de goujon de l'arbre orbital (3), et le tranchant (8) du couteau de coupe (7) est réalisé par une arête périphérique de l'extrémité du couteau de coupe (7) éloignée de l'arbre orbital, ou **en ce que** le couteau de coupe (7) comprend une roulette de coupe (70), ladite roulette de coupe (70) étant fixée en rotation autour de l'axe longitudinal (30) de l'arbre orbital (3) à l'extrémité du couteau de coupe (7) éloignée de l'arbre orbital.

7. Dispositif de coupe de tube selon la revendication 6, **caractérisé en ce qu'**un élargissement (65) pour le rabattement d'une zone de bordure (63) de l'extrémité libre du tube qui apparaît lors de la coupe du tube (14) est prévu à l'extrémité du couteau de coupe (7) éloignée de l'arbre orbital.
